# EUROPEAN PATENT APPLICATION

(11) **EP 2 816 022 A1**
(43) Date of publication of application: **24.12.2014**
(21) Application number: 14172666.1
(22) Date of filing: 17.06.2014
(51) Int. Cl.: C05F 17/00, C02F 3/00

(54) **Animal waste treatment**

(30) Priority: 18.06.2013 GB 201310798
(71) Applicant: Aerobact Limited, Keele, Staffordshire ST5 5AA (GB)
(72) Inventor: Wood, Paul Anthony, Keele, Staffordshire ST5 5AA (GB)
(74) Representative: Sales, Robert Reginald

(57) **Abstract**

A method of treating animal waste, the method including locating farm slurry in a receptacle, introducing air into the slurry via air diffusion to provide a dissolved oxygen level of between 0.5mg/l⁻¹ and 2mg/l⁻¹, thereby creating aerobic conditions in the slurry, monitoring and if necessary adjusting the pH level of the slurry to be between 6 and 8 by adding phosphoric acid. The nitrate content of the slurry is measured, and when a required level is reached the method can be finished.

## Description

This invention concerns a method of treating animal waste to enhance the natural nutrients for use as a fertiliser.

Commonly in intense farming, vast amounts of animal manure accumulate that pose a responsibility to the farmer to manage, specifically in the winter months, when livestock can be housed inside. The collected manure is referred to as farm slurry.

The farm slurry is collected in a variety of ways, including slurry tanks. The slurry is stored in tanks, where they are left without any further intervention. This causes the manure to turn into an anaerobic medium, which stimulates the production of greenhouse gases (methane and nitrous oxide, i.a.), toxic and odorous gases (ammonia, hydrogen sulphide, volatile fatty acids, and phenols, i.a.) via fermentation processes. The farming industry is especially under pressure from environmentally oriented organisations and political lobbies due to their contribution of nitrous oxide and other greenhouse gasses. Furthermore, additional pressure is put on farmers by nearby communities that complain about the slurry odour during the spreading seasons.

Due to its undisturbed state, natural separation occurs and light particles float to the surface that causes the formation of a crust. Dense particles sink and may cause problems when the slurry is subsequently handled and spread.

At times, farmers will disturb the slurry in order to disrupt the crust and to mix the farm slurry prior to emptying the slurry tank. A consequence of this is the release of gases that have been allowed to accumulate and dissolve in the slurry; these can have fatal consequences in cases of direct inhalation and can further act as environmental hazards due to greenhouse gas emissions.

The high levels of Biological Oxygen Demand (BOD) in the slurry, extending to 1500 mg/L and upwards, result in major pollution in groundwater, lakes, and rivers that are in close proximity of farms and agricultural fields, after spreading. If the slurry enters the water source its demand for dissolved oxygen significantly affects aerobic biological organisms.

Farmers regard slurry as a potent fertilizer, which, if spread to land, increases crop yields and improves growing times. However, over time, some components of the slurry initiate and maintain a process known as nutrient lock-up. This occurs when nutrients involve in chemical associations, the products of which are often insoluble in water (hydrophobic) and therefore unavailable for plant take up.

The conversion of organic and otherwise fixed nitrogen into the volatile compound ammonia induces loss of nitrogen to the atmosphere. This loss in nitrogen decreases the fertiliser value of the slurry over time. Furthermore, loss of carbon in form of methane and volatile fatty acids, as well as other volatile organic compounds, reduces the carbon:nitrogen ratio of the slurry.

Fine bubble diffusers produce relatively small air bubbles. The size of the bubbles on discharge will depend on the depth of the diffuser in a liquid, but will generally be less than 2mm diameter, and often less than 1mm diameter at relatively shallow depths.

### Statements of Invention

According to the present invention there is provided a method of treating animal waste, the method including locating farm slurry in a receptacle, introducing air into the slurry via air diffusion to provide a dissolved oxygen level of between 0.5mg/l⁻¹ and 2mg/l⁻¹, thereby creating aerobic conditions in the slurry, monitoring and if necessary adjusting the pH level of the slurry to be between 6 and 8, and adding a mixed culture of bacillus and nitrosifying and nitrifying bacteria to the slurry.

Further doses of a mixed culture of nitrosifying and nitrifying bacteria may be added to the slurry over time.

The air may be introduced by fine bubble diffusion, and a plurality of fine bubble diffusers may be located in the receptable.

The bacteria may include any species of nitrosomonas, nitrobacter as well as phosphorus solubilising bacteria.

The species of nitrosomonas may be *Nitrosomonas europaea.*

The species of nitrobacter may be *Nitrobacter sp.*

The phosphorus solubilising bacteria may be *Pseudomonas putida.*

The nitrate content of the slurry may be measured, and when a required level is reached the method can be finished.

### Example of Invention

An embodiment of the present invention will now be described by way of example only.

A number of fine bubble diffusers are located in a slurry tank which is gradually filled with separated cattle slurry. Fine bubble diffusers provide the most efficient oxygen transfer method. The fine bubble diffusers are connected to an air supply and each comprise a fabric tube which locates a distributor hose with a plurality of fine openings therein. The distributor hose is surrounded by a plurality of spherical glass beads which *inter alia* act as ballast to retain the diffuser at the bottom of the slurry tank.

Air is blown through the fine bubble diffuser to create aerobic conditions. A dissolved oxygen level of between 0.5mg/l⁻¹ and 2mg/l⁻¹ is reached, and an appropriate dissolved oxygen level will be reached which is dependent on the slurry type, temperature and salinity. Fine bubble diffusion has been found to be significantly more effective than course bubble diffusion in providing a greater mixing action and aeration efficiency due to greater surface area to volume ratio. This ensures that all elements in the slurry are exposed to oxygen and aerobic microbial activity.

The introduction of oxygen has an immediate effect of promoting activity with the existing native heterotrophic aerobic bacteria, which will grow, regenerate and multiply. This bacteria rapidly degrades organic solids and debris composing of fats, proteins, carbohydrates and cellulose. The aeration eliminates anaerobic activity, which otherwise would tend to produce hazardous slurry gases and pungent odours.

Typically 3m long fine bubble diffusers are used passing 0.54kg 0₂/hr is provided with an air flow of 9m³/hr. The size of bubbles produced will depend on the depth of the liquid in the receptacle. Fine bubble is often described as having a discharge diameter of 2mm, the fine bubble diffuser used here achieves a discharge diameter of less than 1 mm at normal depths.

The pH level of the slurry is monitored and phosphoric acid can be added to maintain a level of between 6 and 8. The phosphoric acid increases phosphate concentrations required to meet bacterial demand on phosphate. Simultaneously, the equilibrium of the ammonification process is shifted towards ammonium. An inoculation of a culture of phosphorus solubilising bacteria ensures the solubilisation of immobilised phosphorus.

A culture of nitrifying bacteria, in this example consisting of *Nitrosomonas europaea* and *Nitrobacter* sp., is added to the slurry at regular intervals. The slurry is kept in an aerobic state for the entire storage time, in order to avoid denitrification and the potential repopulation of anaerobic bacteria.

The various nutrients and nitrate content of the slurry are measured. Using relevant testing equipment, the method can be described as finished when the odours have been eliminated and the nature nutrients enhanced.

### Discussion

The aeration of the slurry promotes growth of aerobic bacteria and inhibits growth of anaerobic bacteria.

Greenhouse gases, such as carbon dioxide and nitrous oxide are fixed, e.g. organic carbon, as well as organic and inorganic nitrogen respectively. This occurs due to the promotion of aerobic bacteria, which oxidise previously reduced molecules, which includes most substances produced during fermentation.

Toxic and odorous gases, for instance hydrogen sulphide and volatile fatty acids, are converted into nutrient salts, e.g. hydrogen sulphide is converted into sulphate, and volatile fatty acids are converted into organic carbon. The mechanism causing this conversion is driven by the oxidation and ionisation of these gases via microbial metabolism.

Most pathogens that are active in the internal parts in a mammalian body, are either anaerobes or facultative anaerobes and therefore should be eliminated in the process of aeration.

The nitrifying bacteria produce nitrate from ammonia and ammonium, while, simultaneously, phosphorus-solubilising bacteria mobilise immobile phosphorus; the fertiliser potential of the slurry is therefore enhanced.

Due to the stimulation of the growth of aerobic bacteria, the breakdown of total dissolved solids comprised of carbohydrates, proteins, and lipids, is catalysed and accelerated. Dry matter content, in separated slurry, has shown to demonstrate a percentage decrease of >45% after the process. This improves the spreadability of the slurry and enhances homogeneity of nutrients and overall state of the slurry.

BOD levels of the slurry are drastically lowered, which decreases its pollution potential to near the pollution threshold of lakes and rivers, which is between 20-50 mg l⁻¹. This will make any slurry spill and runoff into the watercourse potentially less polluting. The average percentage decrease has shown to be at >90%.

In essence, additionally to the increase of fertiliser potential of the slurry, its environmental dangers are mostly reduced and some are even eliminated entirely.

### Conclusion

In conclusion, this method describes a process that improves the situation of the farmer regarding farm slurry management, regarding its safety, practicality, and efficiency.

This, however, is accomplished via a comparatively effortless and simplified process that utilises only minimal involvement by the farmer.

Modifications may be devised that can improve the efficiency and practicality of the process, without departing from the scope of the invention. Other species of nitrifying bacteria could be isolated and cultured for the use in the nitrification process. Subsequently, varying pH levels could be adopted in the process, to aid in the maximisation of the nitrification process.

### Formulae

The following formulae relate to operation of the invention.

The conversion of ammonia and oxygen into hydroxylamine and water (via ammonia monooxygenase) and further conversion into nitrite and five hydrogen ions (via hydroxylamine oxidoreductase):

NH₃⁺+O₂+2H⁺ → NH₂OH+H₂O → NO₂⁻+5H⁺

The conversion of two nitrite molecules and two water molecules into two nitrate molecules and 4 hydrogen ions (via nitrite oxidoreductase):

2NO₂⁻+2H₂O → 2NO₃⁻+4H⁺

When the phosphoric acid is added to the slurry, it will react with the water in a tripotic reaction. A phosphoric acid molecule reacts with water yielding one hydronium and one dihydrogen phosphate ion, Then, the dihydrogen phosphate ion react with another water molecule yielding another hydronium and one monohydrogen phosphate ion. In the last step, monohydrogen phosphate ion reacts with another water molecule that yields yet another hydronium and a single phosphate ion. This is shown as follows:

H₃PO₄(s) + H₂O(l) ↔ H₃O⁺(aq) + H₂PO₄⁻(aq)

H₂PO₄⁻(aq)+ H₂O(l) ↔ H₃O⁺(aq) + HPO₄²-(aq)

HPO₄²⁻(aq)+ H₂O(l) ↔ H₃O⁺(aq) + PO₄³⁻(aq)

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of treating animal waste, the method including locating farm slurry in a receptacle, introducing air into the slurry via air diffusion to provide a dissolved oxygen level of between 0.5mg/l⁻¹ and 2mg/l⁻¹, thereby creating aerobic conditions in the slurry, monitoring and if necessary adjusting the pH level of the slurry to be between 6 and 8, and adding a mixed culture of bacillus and nitrosifying and nitrifying bacteria to the slurry.

2. A method according to claim 1, **characterised in that** further doses of a mixed culture of nitrosifying and nitrifying bacteria are added to the slurry over time.

3. A method according to claims 1 or 2, **characterised in that** the air is introduced by fine bubble diffusion.

4. A method according to claim 3, **characterised in that** a plurality of fine bubble diffusers are located in the receptable.

5. A method according to any of the preceding claims, **characterised in that** the bacteria includes any species of nitrosomonas, nitrobacter, and phosphorus solubilising bacteria.

6. A method according to claims 5, **characterised in that** the species of nitrosomonas is *Nitrosomonas europaea.*

7. A method according to claims 5 or 6, **characterised in that** the species of nitrobacter are *Nitrobacter sp.*

8. A method according to any of claims 5 to 7, **characterised in that** the phosphorus solubilising bacteria is *Pseudomonas putida.*

9. A method according to any of the preceding claims, **characterised in that** the nitrate content of the slurry is measured, and when a required level is reached the method is finished.
